(19) Europäisches Patentamt / European Patent Office / Office européen des brevets

(11) **EP 3 251 986 B1**

(12) **EUROPÄISCHE PATENTSCHRIFT**

(45) Veröffentlichungstag und Bekanntmachung des Hinweises auf die Patenterteilung:
**27.01.2021   Patentblatt 2021/04**

(51) Int Cl.:
**B65G 54/02** *(2006.01)*    **G05B 13/02** *(2006.01)*

(21) Anmeldenummer: **17172543.5**

(22) Anmeldetag: **23.05.2017**

(54) **VERFAHREN ZUM BETREIBEN EINES LANGSTATORLINEARMOTORS**

METHOD FOR OPERATING A LONG STATOR LINEAR MOTOR

PROCÉDÉ DE FONCTIONNEMENT D'UN MOTEUR LINÉAIRE À STATOR DÉPLOYÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2016   AT 504952016**

(43) Veröffentlichungstag der Anmeldung:
**06.12.2017   Patentblatt 2017/49**

(73) Patentinhaber: **B&R Industrial Automation GmbH 5142 Eggelsberg (AT)**

(72) Erfinder:
• **Weber, Andreas 5020 Salzburg (AT)**
• **Weißbacher, Joachim 5101 Bergheim (AT)**

(74) Vertreter: **Patentanwälte Pinter & Weiss OG Prinz-Eugen-Straße 70 1040 Wien (AT)**

(56) Entgegenhaltungen:
**EP-A1- 1 180 733     WO-A1-2012/107431**

EP 3 251 986 B1

## Beschreibung

Die gegenständliche Erfindung betrifft ein Verfahren zum Betreiben eines Langstatorlinearmotors mit einer Transportstrecke entlang der eine Vielzahl von Antriebsspulen hintereinander angeordnet sind und mit zumindest einer Transporteinheit, die entlang der Transportstrecke bewegt wird, wobei jede Antriebsspule von einem Antriebsspulenregler mit zugehörigen Reglerparametern geregelt wird, indem von den Antriebsspulenreglern für die mit der Transporteinheit zusammenwirkenden Antriebsspulen Stellgrößen vorgegeben werden.

Aus der EP 1 180 733 A1 ist ein Auto-Tuning Verfahren zum Parametrieren der Reglerparameter eines Motorreglers eines rotativen Elektromotors bekannt. Hierfür werden die Reglerparameter des Motorreglers aus einem identifizierten Frequenzgang ermittelt. Das darin beschriebene Verfahren ist aber für die Anwendung bei Langstatorlinearmotoren ungeeignet.

In so gut wie allen modernen Produktionsanlagen ist es erforderlich, Bauteile oder Komponenten, auch über längere Transportstrecken hinweg, mit Transporteinrichtungen zwischen einzelnen Handhabungs- oder Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, entlang einer Transportstrecke angeordnet. Auf einer Transporteinheit ist eine Anzahl von Erregungsmagneten, entweder als Permanentmagnete oder als elektrische Spule oder Kurzschlusswicklung, angeordnet, die mit den Antriebsspulen des Stators zusammenwirken. Der Langstatorlinearmotor kann als Synchronmaschine, sowohl selbsterregt oder fremderregt, oder als Asynchronmaschine ausgeführt sein. Durch Ansteuerung der einzelnen Antriebsspulen im Bereich der Transporteinheit zur Regelung des magnetischen Flusses, wird eine Vortriebskraft auf die Transporteinheit erzeugt und die Transporteinheit kann damit entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem jeweils nur die im Bereich der einzelnen Transporteinheiten angeordneten Antriebsspulen aktiviert werden. Ein Langstatorlinearmotor zeichnet sich insbesondere durch eine bessere und flexiblere Ausnützung über den gesamten Arbeitsbereich der Bewegung (Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

In der US 2013/0074724 A1 und der WO 2004/103792 A1 sind die Antriebsspulen des Stators an der Oberseite der Transportstrecke angeordnet. Die Permanentmagnete sind an der Unterseite der Transporteinheiten angeordnet. In der WO 2013/143783 A1 und der US 6,876,107 B2 sind die Permanentmagnete an beiden Seiten der zentral angeordneten Antriebsspulen vorgesehen, womit die Permanentmagnete den Stator des Langstatorlinearmotors umgeben und die Antriebsspulen mit den beidseitig angeordneten Permanentmagneten zusammenwirken.

Die Führung der Transporteinheiten entlang der Transportstrecke erfolgt entweder mechanisch, beispielsweise durch Führungsrollen, wie beispielsweise in der WO 2013/143783 A1 oder der US 6,876,107 B2, oder durch magnetische Führung, wie beispielsweise in der WO 2004/103792 A1. Auch Kombinationen aus einer mechanischen und magnetischen Führung sind denkbar. Im Falle der magnetischen Führung können an den Transporteinheiten beidseitig Führungsmagnete vorgesehen sein, die mit an der Transportstrecke gegenüber angeordneten Führungsstäben zusammenwirken. Die Führungsstäbe bilden dabei ein magnetisches Joch aus, die den magnetischen Kreis der Führungsmagnete schließen. Die so gebildeten magnetischen Führungskreise wirken damit einer seitlichen Bewegung der Transporteinheiten entgegen, womit die Transporteinheiten seitlich geführt werden. Eine ähnliche magnetische Seitenführung kann auch der US 6,101,952 A entnommen werden.

In vielen Transporteinrichtungen sind auch Übergabepositionen, z.B. in Form von Weichen, notwendig, um komplexe und intelligente Bahnplanungen bzw. Bahnrealisierungen der Transporteinrichtung zu ermöglichen. Diese Übergabepositionen wurden bisher oftmals mithilfe zusätzlicher mechanischer Auslöseeinheiten realisiert. Ein Beispiel dafür findet sich in der US 2013/0074724 A1 in Form einer mechanisch ausgelösten Weiche mittels beweglicher Umlenkarmen oder eines Drehteller. Es sind aber auch schon Transporteinrichtungen bekannt geworden, in denen zusätzliche elektrische Hilfsspulen verwendet werden, um eine Weichenauslösung zu realisieren. In der US 6,101,952 A sind die Hilfsspulen beispielsweise am magnetischen Joch des magnetischen Führungskreises angeordnet, während die Hilfsspulen in der US 2013/0074724 A1 seitlich an der Transportstrecke angeordnet sind. In der DE 1 963 505 A1, der WO 2015/036302 A1 und der WO 2015/042409 A1 sind magnetisch aktivierte Weichen eines Langstatorlinearmotors beschrieben, die ohne zusätzliche Hilfsspulen auskommen.

Ein Langstatorlinearmotor stellt hohe Anforderungen an die Regelung der Bewegung der Transporteinheiten. Hierzu sind entlang der Transportstrecke üblicherweise eine Vielzahl von Reglern angeordnet, die die Statorströme der Antriebsspulen regeln, um die Transporteinheiten wie vorgesehen entlang der Transportstrecke zu bewegen. Für die Bewegung der Transporteinheiten ist es notwendig, dass jede Antriebsspule separat geregelt wird, um eine flüssige, kontrollierte und stabile Bewegung der Transporteinheiten entlang der Transportstrecke zu gewährleisten. Auf der Transportstrecke bewegen sich aber eine Vielzahl von Transporteinheiten, weshalb durch verschiedene Antriebsspulen verschiedene Transporteinheiten geregelt werden. Die entlang der Transportstrecke bewegten Transporteinheiten können sich aber in ihren Eigenschaften unterscheiden. Beispielsweise können Transporteinheiten verschieden beladen sein, verschiedene Verschleißzustände aufweisen, aufgrund von fertigungstechnischen Imperfektionen verschiedene Führungskräfte bewirken, verschiedene Reibungskräfte bewirken, usw. Ebenso ist es denkbar, dass Transporteinheiten mit unterschiedlichem Design oder unterschiedlicher Baugröße entlang der Transportstrecke bewegt werden. All diese Faktoren beeinflussen aber die Regelung der Transporteinheiten. Nachdem die Regelung der Antriebsspulen aber für alle Transporteinheiten stabil und zuverlässig funktionieren muss, wurde bisher eine konservative Regelstrategie verfolgt. Damit büßte man bei der Regelung aber Dynamik ein, womit schnelle Regeleingriffe, beispielsweise eine abrupte Geschwindigkeitsänderung der Transporteinheit, beschränkt sind.

Die einzelnen Transporteinheiten unterliegen aber auch unterschiedlichem Verschleiß, was die Wartung der Transporteinheiten bzw. des Langstatorlinearmotors schwierig macht. Alle Transporteinheiten zu vorgegebenen Zeitpunkten zu warten oder gar auszutauschen ist zwar einfach und möglich, aber auch aufwendig und teuer, da damit womöglich auch Transporteinheiten gewartet oder getauscht werden, bei denen es noch gar nicht notwendig wäre. Auf der anderen Seite kann sich mit höherem Verschleiß der Fahrtwiderstand einzelner Transporteinheiten aufgrund sich verschlechternder Reibung zwischen den Transporteinheiten und der Führung erhöhen. Das würde auch zu höheren Leistungsverlusten führen, da die Antriebsleistung der Transporteinheiten erhöht werden müsste. Nicht zuletzt beeinflusst der aktuelle Verschleißzustand der Transporteinheit auch deren Regelung,

Es ist daher eine Aufgabe der gegenständlichen Erfindung den Betrieb eines Langstatorlinearmotors besser an die Anforderungen oder die Zustände der einzelnen Transporteinheiten bzw. der Transportstrecke anzupassen.

Diese Aufgabe wird erfindungsgemäß durch das im beigefügten Anspruch 1 definierte Verfahren gelöst. Das erlaubt die einfache Ermittlung optimierter Reglerparameter des Antriebsspulenreglers, was wiederum schnellere Regeleingriffe als bisher ermöglicht.

In einer bevorzugten Ausgestaltung werden die Reglerparameter variiert, um eine gewünschte, vorgegebene Eigenschaft des Frequenzganges einzustellen. Ein Frequenzgang kann auf einfach Weise ermittelt werden, was es wiederum ermöglicht, auf einfache Weise die Regelparameter zu ermitteln.

Dabei kann es vorteilhaft sein, für verschiedene Transporteinheiten dieselben Reglerparameter zu verwenden oder für verschiedene Transporteinheiten verschiedene Reglerparameter zu verwenden oder für verschiedene Transportabschnitte der Regelstrecke verschiedene Reglerparameter zu ermitteln oder für verschiedene Beladungszustände einer Transporteinheit verschiedene Reglerparameter zu ermitteln. Damit kann die erfindungsgemäße Methode sehr flexibel je nach den Anforderungen der jeweiligen Anwendung verwendet werden.

Die Reglerparametrierung wird in besonders bevorzugter Ausgestaltung in vorgegebenen Abständen wiederholt, um die optimalen Reglerparameter an sich möglicherweise ändernde Eigenschaften der Transporteinheit oder der Transportstrecke anzupassen.

Weiters können mit der erfindungsgemäßen Methode auch Charakteristika der Regelstrecke ermittelt werden, insbesondere aus dem Frequenzgang die Masse der mit der Transporteinheit beförderten Last. Damit können dann wiederum die zugehörigen optimalen Reglerparameter ausgewählt werden. Ebenso lassen sich aus dem Frequenzgang vorhandene Resonanz- und Antiresonanzfrequenzen ermitteln, die in vorteilhafter Weise verwendet werden, um zu entscheiden, ob die Resonanz- und Antiresonanzfrequenzen in der Regelung gedämpft werden.

In einer vorteilhaften Weiterentwicklung wird von der Transporteinheit ein vorgegebenes Bewegungsprofil abgefahren wird und dabei zumindest ein Systemparameter eines Modells der Regelstrecke mittels eines Parameterschätzverfahrens ermittelt, wobei der zeitliche Verlauf des Wertes des Systemparameters erfasst wird und aus dem zeitlichen Verlauf auf einen Verschleißzustand der Transporteinheit und/oder der Transportstrecke geschlossen wird. Dazu kann der Antriebsspulenregler zuerst auch erfindungsgemäß parametriert werden. Der Systemparameter spiegelt den Zustand der Transportstrecke wider. Durch die Beobachtung des zeitlichen Verlaufs des Systemparameters kann daher auf möglichen Verschleiß geschlossen werden. Der aktuelle Verschleißzustand der Transporteinheit und/oder der Transportstrecke kann dann auf verschiedene Weise genutzt werden. Z.B. kann die Regelung an den Verschleißzustand angepasst werden, z.B. in dem die Reglerparameter verändert werden, oder es kann auch eine Wartung der Transporteinheit und/oder der Transportstrecke durchgeführt werden. Dabei ist es ein angestrebtes Ziel die notwendigen Regeleingriffe, insbesondere in Form der Amplituden der Stellgrößen, so gering wie möglich zu halten.

Der Systemparameter wird in einer vorteilhaften Ausgestaltung ermittelt, indem ein an einer Antriebsspule eingestellte Statorstrom erfasst wird und gleichzeitig aus dem Modell der Regelstrecke berechnet wird und ein Fehler zwischen dem erfassten und berechneten Statorstrom minimiert wird, indem der zumindest eine Systemparameter des Modells variiert wird.

Das Führungsverhalten der Regelung kann verbessert werden, wenn eine Vorsteuerung implementiert wird, die auf den Eingang des Antriebsspulenreglers wirkt. Die Vorsteuerung regelt dabei den Regelfehler zum großen Teil aus. Der Antriebsspulenregler muss dabei nur mehr Nichtlinearitäten, unbekannte äußere Einflüsse und Störgrößen ausregeln, die durch die Vorsteuerung nicht geregelt werden.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt

Fig.1 und 2 jeweils eine Transporteinrichtung in Form eines Langstatorlinearmotors,
Fig.3 einen Querschnitt durch eine Transporteinheit,
Fig.4 das Reglerschema der Transporteinrichtung,
Fig.5 und 6 das grundlegende Konzept zur Identifikation der Reglerparameter eines Antriebsspulenreglers,
Fig.7 eine Reglerkaskade des Antriebsspulenreglers mit Vorsteuerung und Führungsglättungsfilter,
Fig.8 die Aufteilung der einzuregelnden Vortriebskraft auf die einzelnen wirkenden Antriebsspulen,
Fig.9 einen Frequenzgang der Regelstrecke und
Fig.10 einen Antriebsspulenregler mit Vorsteuerung.

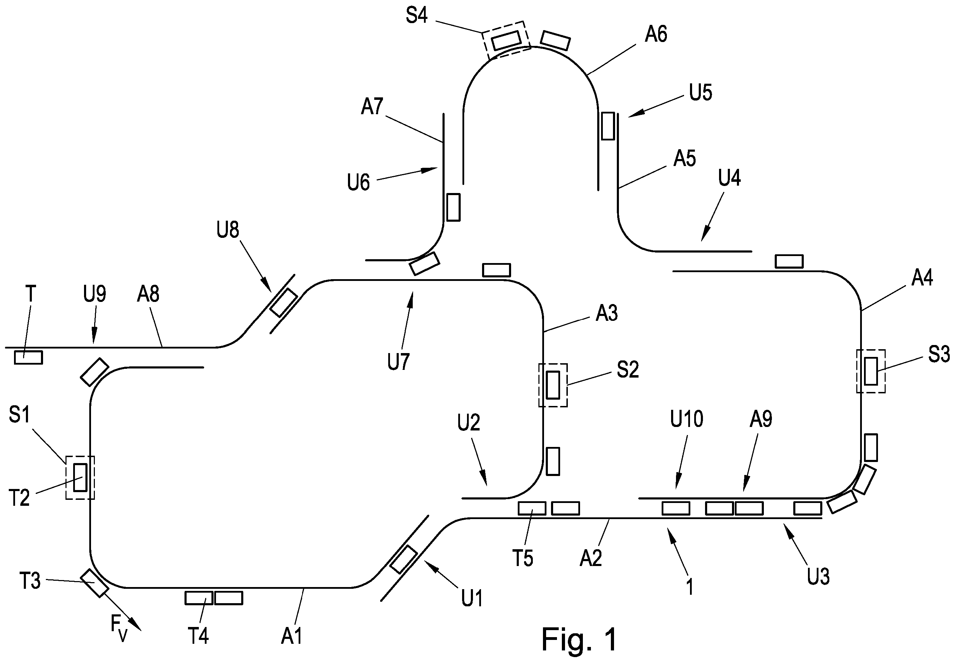

In Fig.1 ist eine Transporteinrichtung 1 in Form eines Langstatorlinearmotors beispielhaft dargestellt. Die Transporteinrichtung 1 besteht aus einer Anzahl n von Transportabschnitten A1 ... A9 (allgemein An), die zur Transporteinrichtung 1 zusammengestellt sind. Dieser modulare Aufbau ermöglicht eine sehr flexible Gestaltung der Transporteinrichtung 1, bedingt aber auch eine Vielzahl von Übergabepositionen U1 ... U9, an denen die auf der Transporteinrichtung 1 bewegten Transporteinheiten T1 ... Tx (aus Gründen der Übersichtlichkeit sind in Fig.1 nicht alle Transporteinheiten mit einem Bezugszeichen gekennzeichnet) von einem Transportabschnitt A1 ... A9 auf einen anderen übergeben werden.

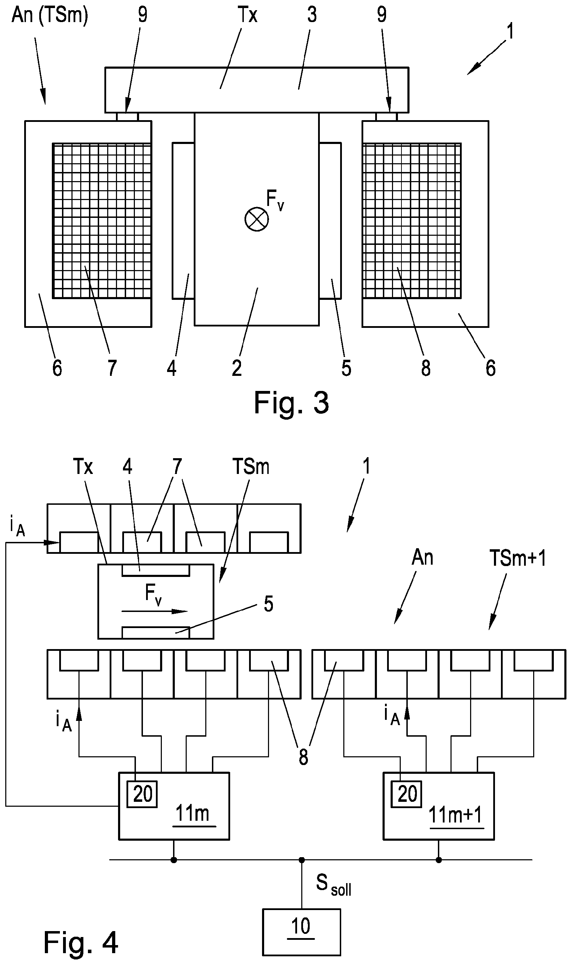

Die Transporteinrichtung 1 ist als Langstatorlinearmotor ausgeführt, bei denen die Transportabschnitte A1 ... A9 in an sich bekannter Weise jeweils einen Teil eines Langstators eines Langstatorlinearmotors ausbilden. Entlang der Transportabschnitte A1 ... A9 sind daher in Längsrichtung in bekannter Weise eine Vielzahl von elektrischen Antriebsspulen angeordnet (in Fig.1 aus Gründen der Übersichtlichkeit nicht dargestellt), die mit Erregungsmagneten an den Transporteinheiten T1 ... Tx (siehe Fig.3) zusammenwirken. In ebenso bekannter Weise wird durch Kontrolle des elektrischen Statorstromes $i_A$ der einzelnen Antriebsspulen 7, 8 für jede der Transporteinheiten T1 ... Tx unabhängig eine Vortriebskraft $F_v$ erzeugt, die die Transporteinheiten T1 ... Tx in Längsrichtung entlang der Transportabschnitte A1 ... A9, also entlang der Transportstrecke, bewegt. Jede der Transporteinheiten T1 ... Tx kann dabei individuell (Geschwindigkeit, Beschleunigung, Bahn) und unabhängig (bis auf die Vermeidung von möglichen Kollisionen) von den anderen Transporteinheiten T1 ... Tx bewegt werden. Nachdem dieses grundlegende Prinzip eines Langstatorlinearmotors hinreichend bekannt ist, wird hier nicht näher darauf eingegangen.

Entlang der Transportstrecke der Transporteinrichtung 1 sind auch einige Übergabepositionen U1 ... U10 angeordnet. Hierbei sind verschiedene Arten von Übergabepositionen U1 ... U10 denkbar. An den Übergabepositionen U2 und U7 ist z.B. eine Weiche vorgesehen, während die anderen Übergabepositionen U1, U3 ... U6, U8, U9 z.B. als Wechselstellen von einem Transportabschnitt A1 ... A8 auf einen anderen ausgeführt sind. An der Übergabeposition U10 ist z.B. ein Übergang von einem einseitigen Transportabschnitt A2 auf einen zweiseitigen Transportabschnitt A9 vorgesehen. An der Übergabeposition U2 (Weiche) kann eine Transporteinheit T6 beispielsweise auf dem Transportabschnitt A2 oder dem Transportabschnitt A3 weiterbewegt werden. An einer Übergabeposition U1 (Wechselposition) wird eine Transporteinheit T5 vom einseitigen Transportabschnitt A1 an den einseitigen Transportabschnitt A2 übergeben. Die Übergabe von einem Transportabschnitt auf einen anderen Transportabschnitt kann in beliebiger Weise erfolgen.

Entlang der Transportstrecke der Transporteinrichtung 1, die im Wesentlichen durch die Längsrichtung der Transportabschnitte A1 ... A9 gegeben ist, können auch eine Anzahl von Arbeitsstationen S1 ... S4 angeordnet sein, in denen eine Manipulation an den mit den Transporteinheiten T1 ... Tx transportierten Komponenten stattfindet. Die Arbeitsstation S1 kann beispielsweise als Einschleuse- und/oder Ausschleusestation ausgeführt sein, in der fertig bearbeitete Komponenten entnommen werden und zu bearbeitende Komponenten an eine Transporteinheit T1 ... Tx übergeben werden. In den Arbeitsstationen S2 ... S4 können an den Komponenten irgendwelche Bearbeitungsschritte vorgenommen werden. Dabei können die Transporteinheiten T1 ... Tx in einer Arbeitsstationen S1 ...S4 zur Bearbeitung gestoppt werden, z.B. in einer Füllstation, in der leere Flaschen befüllt werden, oder durchbewegt werden, z.B. in einer Temperierstation in der Komponenten temperaturbehandelt werden, gegebenenfalls auch mit einer anderen Geschwindigkeit als zwischen den Arbeitsstationen S1 ... S4.

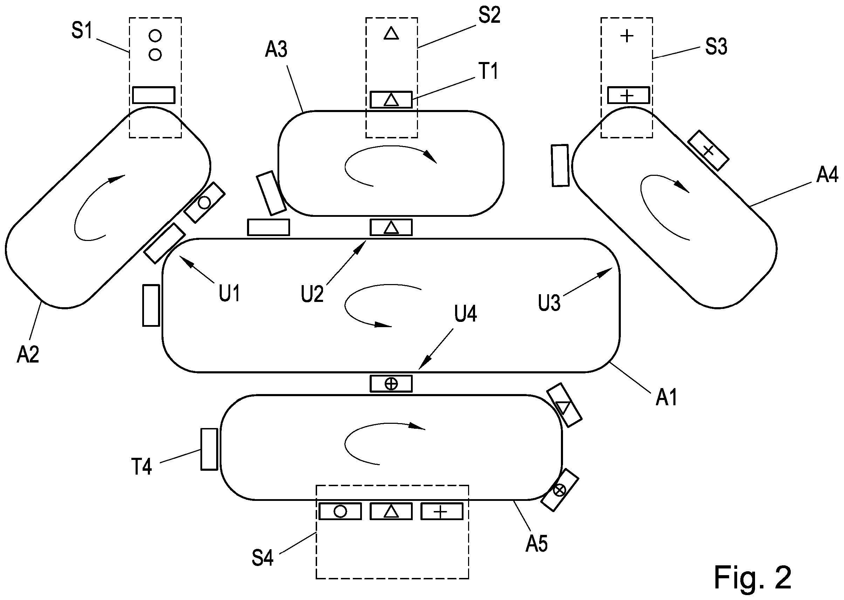

Ein anderes Beispiel einer Transporteinrichtung 1 ist in Fig.2 dargestellt. Hier sind fünf in sich geschlossene Transportabschnitte A1 ... A5 vorgesehen. Die Transportabschnitt A2 ... A4 dienen hierbei dem Einschleusen von verschiedenen Komponenten an den Arbeitsstationen S1 ... S3. In einer Arbeitsstation S4 eines Transportabschnitt A5 werden diese Komponenten miteinander verbunden oder anderweitig bearbeitet und aus der Transporteinrichtung 1 ausgeschleust. Ein weiterer Transportabschnitt A1 dient der Überführung der Komponenten aus den Transportabschnitten A2, A3, A4 in den Transportabschnitt A5. Dazu sind Übergabepositionen U1, U2, U3 vorgesehen, um die Transporteinheiten Tx mit den verschiedenen Komponenten in den Transportabschnitt A1 überzuführen. Weiters ist eine Übergabeposition U4 vorgesehen, in der die Transporteinheiten Tx mit den verschiedenen Komponenten in den Transportabschnitt A5 überführt werden.

Die Transporteinrichtung 1 kann nahezu beliebig ausgeführt sein und kann aus verschiedenen Transportabschnitt A zusammengesetzt werden, wobei auch bedarfsweise Übergabepositionen U und Arbeitsstationen S vorgesehen sein können.

Fig.3 zeigt einen Querschnitt durch einen beliebigen Transportabschnitt An und einer darauf bewegten Transporteinheit Tx. Eine Transporteinheit Tx besteht im gezeigten Ausführungsbeispiel aus einem Grundkörper 2 und einer daran angeordneten Komponentenaufnahme 3 zur Aufnahme eines zu transportierenden Bauteils (nicht dargestellt), wobei die Komponentenaufnahme 3 grundsätzlich an einer beliebigen Stelle des Grundkörpers 2 angeordnet sein kann, insbesondere auch an der Unterseite für hängende Bauteile. Am Grundkörper 2 ist, bevorzugt an beiden Seiten der Transporteinheit Tx, die Anzahl der Erregungsmagnete 4, 5 des Langstatorlinearmotors angeordnet. Die Transportstrecke der Transporteinrichtung 1, bzw. eines Transportabschnitts An, wird durch eine stationäre Führungskonstruktion 6 gebildet, an der die Antriebsspulen 7, 8 des Langstatorlinearmotors angeordnet sind. Der Grundkörper 2 mit den beidseitig angeordneten Permanentmagneten als Erregungsmagnete 4, 5 ist im gezeigten Ausführungsbeispiel zwischen den Antriebsspulen 7, 8 angeordnet. Damit ist jeweils zumindest ein Erregungsmagnet 4, 5 einer Antriebsspule 7, 8 (oder einer Gruppe von Antriebsspulen) gegenüberliegend angeordnet und wirkt damit mit zumindest einer Antriebsspule 7, 8 zur Erzeugung einer Vortriebskraft $F_v$ zusammen. Damit ist die Transporteinheit Tx zwischen der Führungskonstruktion 6 mit den Antriebsspulen 7, 8 und entlang der Transportstrecke bewegbar.

Am Grundkörper 2 und/oder an der Komponentenaufnahme 3 können natürlich auch noch (hier aus Gründen der Übersichtlichkeit nicht dargestellte oder nur angedeutete) Führungselemente 9, wie Rollen, Räder, Gleitflächen, Magnete, etc., vorgesehen sein, um die Transporteinheit Tx entlang der Transportstrecke zu führen. Die Führungselemente 9 der Transporteinheit Tx wirken dabei zur Führung mit der stationären Führungskonstruktion 6 zusammen, z.B. in dem sich die Führungselemente 9 an der Führungskonstruktion 6 abstützen, daran abgleiten oder abrollen, etc. Die Führung der Transporteinheit Tx kann aber auch durch das Vorsehen von Führungsmagneten erfolgen. Selbstverständlich sind auch andere Anordnungen der Antriebsspulen 7, 8 und der damit zusammenwirkenden Erregungsmagnete 4, 5 denkbar. Z.B. ist es auch möglich, die Antriebsspulen 7, 8 innen und die Erregungsmagnete 4, 5 nach innen gerichtet und die Antriebsspulen 7, 8 umgreifend anzuordnen. Gleichfalls können an nur einer Seite einer Transporteinheit Tx Erregungsmagnete vorgesehen sein. In diesem Fall würden auch Antriebsspulen an nur einer Seite der Transporteinheit Tx ausreichen.

Um eine Transporteinheit Tx vorwärts zu bewegen wird in die Antriebsspulen 7, 8 im Bereich der Transporteinheit Tx bekanntermaßen ein Statorstrom $i_A$ eingeprägt (Fig.4), wobei in verschiedenen Antriebsspulen 7, 8 auch unterschiedliche Statorströme $i_A$ (in Betrag und vektorieller Richtung) eingeprägt werden können. Hierbei ist es auch ausreichend nur in die Antriebsspulen 7, 8 einen Statorstrom $i_A$ einzuprägen, die gerade mit den Erregungsmagneten 4, 5 an der Transporteinheit Tx zusammenwirken können. Zur Erzeugung einer auf die Transporteinheit Tx wirkenden Vortriebskraft $F_v$, wird eine Antriebsspule 7, 8 mit einem Statorstrom $i_A$ mit einer vortriebskraftbildenden Stromkomponente $i_{Aq}$ bestromt.

Für die Bewegung der Transporteinheit Tx müssen aber nicht gleichzeitig die beidseitig angeordneten Antriebsspulen 7, 8 durch Einprägen eines Statorstromes $i_A$ bestromt werden. Es reicht grundsätzlich aus, wenn die auf die Transporteinheit Tx zur Bewegung wirkende Vortriebskraft $F_v$ nur mittels der Antriebsspulen 7, 8 einer Seite erzeugt wird. An Streckenabschnitten der Transportstrecke, an denen eine große Vortriebskraft $F_v$ benötigt wird, z.B. im Falle einer Steigung, einer schweren Last oder in Bereichen der Beschleunigung der Transporteinheit Tx, können die Antriebsspulen 7, 8 zu beiden Seiten bestromt werden (z.B. Transportabschnitt A9 in Fig.1), womit die Vortriebskraft $F_v$ vergrößert werden kann. Ebenso ist es denkbar, dass in gewissen Transportabschnitten An die Führungskonstruktion 6 nur einseitig ausgeführt ist, oder dass in gewissen Transportabschnitten An die Führungskonstruktion 6 zwar zweiseitig ausgeführt ist, aber nur einseitig mit Antriebsspulen 7, 8 bestückt ist. Das ist auch in Fig.1 angedeutet, in der Streckenabschnitte mit beidseitiger Führungskonstruktion 6 und Streckenabschnitte mit nur einseitiger Führungskonstruktion 6 angedeutet sind.

Es ist ebenso bekannt, einen Transportabschnitt An aus einzelnen Transportsegmenten TS zusammenzusetzen, die jeweils eine Anzahl von Antriebsspulen 7, 8 tragen. Ein Transportsegment TS kann jeweils durch eine zugeordnete Segmentregelungseinheit 11 geregelt werden, wie beispielsweise in der US 6,876,107 B2 beschrieben und in Fig. 4 dargestellt ist. Eine Transporteinheit Tx, die sich in einem Transportsegment TSm befindet, wird daher von der zugehörigen Segmentregelungseinheit 11m geregelt. Im Wesentlichen bedeutet das, dass die Segmentregelungseinheit 11m die Antriebsspulen 7, 8 des zugehörigen Transportsegments TSm so regelt, dass die Transporteinheit Tx durch die erzeugte Vortriebskraft $F_v$ in der gewünschten Weise (Geschwindigkeit, Beschleunigung) entlang des Transportsegments TSm bewegt wird. Bewegt sich eine Transporteinheit Tx von einem Transportsegment TSm in das nächstfolgende Transportsegment TSm+1, wird auch die Regelung der Transporteinheit Tx in geordneter Weise auf die Segmentregelungseinheit 11m+1 des nächstfolgenden Transportsegments TSm+1 übergeben. Die Bewegung der Transporteinheit Tx durch die Transporteinrichtung 1 kann in einer übergeordneten Anlagenregelungseinheit 10, die mit den Segmentregelungseinheiten 11 verbunden ist, überwacht werden. Die Anlagenregelungseinheit 10 steuert beispiels-weise durch Positionsvorgaben $s_{soll}$ oder Geschwindigkeitsvorgaben $v_{soll}$ die Bewegung der Transporteinheit Tx durch die Transporteinrichtung 1. Die Segmentregelungseinheiten 11 regeln dann einen allfälligen Fehler zwischen Sollgröße und Istgröße aus, indem die Antriebsspulen 7, 8 des Transportsegments TSm mit einem Statorstrom $i_A$ beaufschlagt werden. Hierfür ist es natürlich erforderlich, eine Istgröße, wie beispielsweise eine Istposition s oder eine Istgeschwindigkeit v, mittels geeigneter Sensoren zu messen oder anhand von anderen Messgrößen oder anderweitig bekannten oder berechneten Größen zu schätzen. Dabei kann natürlich auch vorgesehen sein, für die Antriebsspulen 7, 8 jeder Seite eine eigene Segmentregelungseinheit 11 vorzusehen, wobei die Segmentregelungseinheiten 11 an jeder Seite auch über eine Datenleitung miteinander verbunden sein können und Daten, beispielsweise Messwerte einer Istgröße, untereinander austauschen können.

Jede Segmentregelungseinheit 11 erzeugt aus den Sollwertvorgaben $s_{soll}$ bzw. $v_{soll}$ und den Istgrößen s bzw. v einen Statorstrom $i_A$, mit dem die benötigten Antriebsspulen 7, 8 beaufschlagt werden. Vorzugsweise werden dabei nur die Antriebsspulen 7, 8 geregelt, die mit der Transporteinheit Tx, bzw. deren Erregungsmagneten 4, 5, zusammenwirken. Der Statorstrom $i_A$ ist ein Stromvektor (Stromraumzeiger), der eine vortriebskraftbildende q-Komponente $i_{Aq}$ zur Erzeugung der Vortriebskraft $F_v$, und gegebenenfalls auch eine seitenkraftbildende d-Komponente $i_{Ad}$, umfasst und der einen magnetischen Fluss $\Psi$ bewirkt.

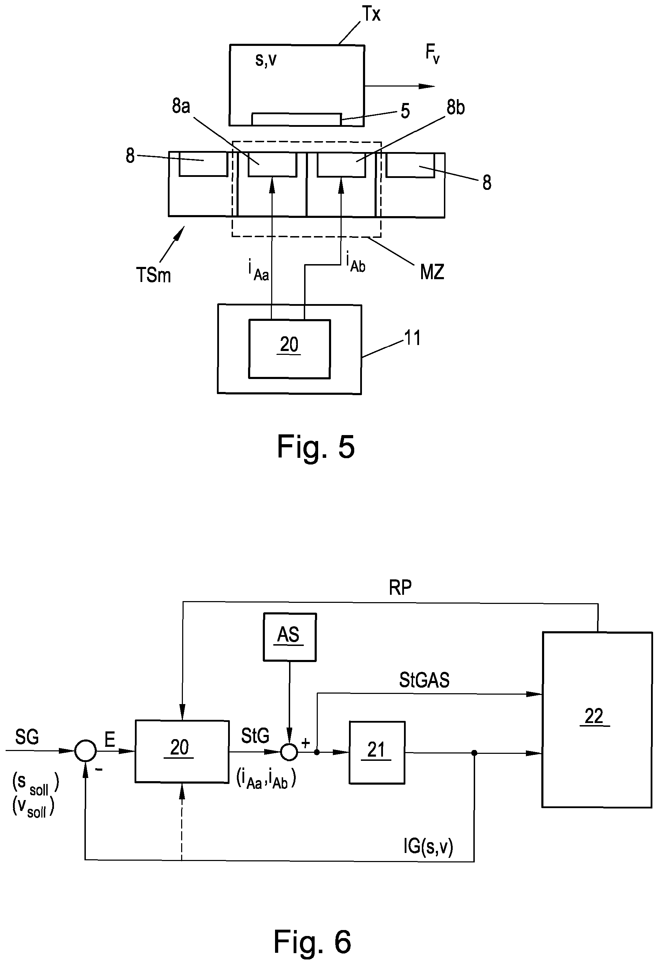

Zur Regelung der Bewegung einer Transporteinheit Tx ist in einer Segmentregelungseinheit 11 ein Antriebsspulenregler 20 implementiert, der alle Antriebsspulen 7, 8 des Transportsegments TSm regelt, wie in Fig.5 dargestellt.

In Fig.6 ist das grundlegende Regelkonzept und das grundlegende erfindungsgemäße Konzept zur Identifikation der Reglerparameter RP eines Antriebsspulenreglers 20 einer Antriebsspule 8a, 8b als Blockschaltbild dargestellt. Der Regelstrecke 21 (im Wesentlichen das technische System bzw. die Komponenten zwischen Einbringen der Stellgröße z.B. in Form des Statorstromes $i_A$ und dem Erfassen (Messen, Schätzen, Berechnen) der Istgröße IG in Form einer Istposition s oder Istgeschwindigkeit v der Transporteinheit Tx, also insbesondere Antriebsspulen 8a, 8b, Transporteinheit Tx mit Erregungsmagneten 5 und auch das Zusammenwirken der Transporteinheit Tx mit dem Transportabschnitt An) wird vom Antriebsspulenregler 20 für jede Antriebsspule 8a, 8b in herkömmlicher Weise in einem geschlossenen Regelkreis geregelt. Dazu wird in bekannter Weise eine Istgröße IG, z.B. eine Istposition s oder Istgeschwindigkeit v der Transporteinheit Tx, erfasst und rückgeführt. Die Istgröße IG kann gemessen werden, aus anderen gemessenen, berechneten oder bekannten Größen abgeleitet werden oder in einem regelungstechnischen Beobachter ermittelt werden. Die Istgröße IG kann daher als bekannt vorausgesetzt werden und kann auch dem Antriebsspulenregler 20 zugeführt werden, wie in Fig.6 angedeutet. Aus einem Regelfehler E aus der Differenz zwischen Sollgröße SG, z.B. eine Sollposition $s_{soll}$ oder Sollgeschwindigkeit $v_{soll}$, und Istgröße IG ermittelt der Antriebsspulenregler 20 eine Stellgröße StG, z.B. einen Statorstrom $i_{Aa}$, $i_{Ab}$ für jede zu bestromende Antriebsspule 8a, 8b.

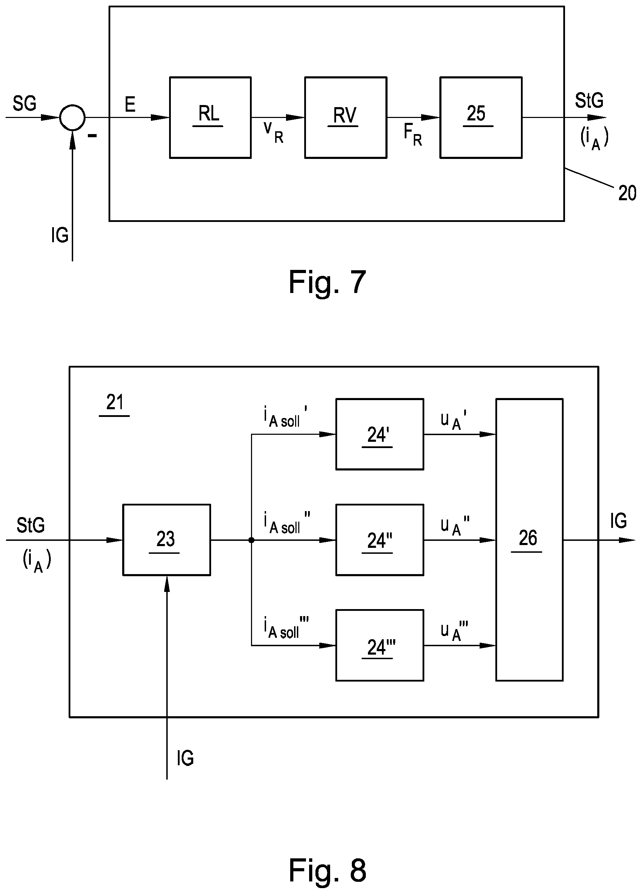

Der Antriebsspulenregler 20 kann eine Reglerkaskade aus einem Lageregler RL und einem Geschwindigkeitsregler RV umfassen, wie in Fig.7 dargestellt. An sich würde aber auch nur ein Lageregler RL oder nur ein Geschwindigkeitsregler RV ausreichen. Bekanntermaßen berechnet der Lageregler RL aus der Sollgröße SG und der Istgröße IG eine einzuregelnde Geschwindigkeit $v_R$, aus der der Geschwindigkeitsregler RV wiederum eine einzuregelnde Vortriebskraft $F_R$ berechnet, wobei auch dabei die Istgröße IG berücksichtigt werden kann. Diese einzuregelnde Vortriebskraft $F_R$ wird letztendlich in einem Umrechnungsblock 25 in den Statorstrom $i_A$ als Stellgröße StG umgewandelt. Hierzu kann beispielsweise, mit der Annahme $i_{Ad}=0$ bzw. $i_{Ad}<<i_{Aq}$, der bekannte Zusammenhang $F_R = \dfrac{K_f}{\sqrt{2}} i_{Aq}$, mit der bekannten Motorkonstanten $K_f$, verwendet werden. Wenn im Geschwindigkeitsregler RV direkt der Statorstrom $i_A$ als Stellgröße StG berechnet wird, kann der Umrechnungsblock 25 auch entfallen.

Nachdem eine Transporteinheit Tx immer mit mehreren Antriebsspulen 7, 8 gleichzeitig zusammenwirkt, wird die einzuregelnde Vortriebskraft $F_R$, bzw. der Statorstrom $i_A$, auch von allen auf die Transporteinheit Tx wirkenden Antriebsspulen 7, 8 aufgebracht. Die einzuregelnde Vortriebskraft $F_R$ ist daher noch gemäß der aktuellen (bekannten) Position s der Transporteinheit Tx auf die einzelnen wirkenden Antriebsspulen 7, 8 aufzuteilen, wie in Fig.8 dargestellt ist. Die Stellgröße StG in Form des Statorstromes $i_A$ wird dazu in einer Stromaufteilungseinheit 23 in die einzelnen Soll-Antriebsspulenströme $i_{Asoll}'$, $i_{Asoll}''$, $i_{Asoll}'''$ der wirkenden Antriebsspulen 7, 8 aufgeteilt. Aus der aktuellen Position ist zu jedem Zeitpunkt bekannt, welchen Anteil jede wirkende Antriebsspule 7, 8 beiträgt. Aus den Soll-Antriebsspulenströme $i_{Asoll}'$, $i_{Asoll}''$, $i_{Asoll}'''$, werden dann in den jeweiligen Antriebsspulen 7, 8 zugeordneten Einzelspulenreglern 24', 24", 24''' die benötigten Spulenspannungen $u_A'$, $u_A''$, $u_A'''$ der wirkenden Antriebsspulen 8', 8", 8''' berechnet, die an die Antriebsspulen 8', 8", 8''' angelegt werden müssen, um die Soll-Antriebsspulenströme $i_{Asoll}'$, $i_{Asoll}''$, $i_{Asoll}'''$ einzustellen. Dazu kann natürlich auch vorgesehen sein, dass den Einzelspulenreglern 24', 24", 24" auch aktuelle Istgrößen der Statorströme $i_A$ zugeführt werden.

Nachdem ein Einzelspulenregler 24 nur von der konkreten Realisierung der Antriebsspulen 7, 8 abhängig ist, kann der Einzelspulenregler 24, bzw. dessen Parameter, vorab festgelegt werden, bzw. als bekannt vorausgesetzt werden. Aus diesem Grund werden die Einzelspulenregler 24 vorzugsweise auch der Regelstrecke 21 zugeordnet, wie in Fig.8 dargestellt. Ebenso wird die Aufteilung der Stellgröße StG in Größen der einzelnen wirkenden Antriebsspulen 7, 8 vorzugsweise der Regelstrecke 21 zugeordnet. Die Spulenspannungen $u_A'$, $u_A''$, $u_A'''$ der wirkenden Antriebsspulen 8', 8", 8''' werden dann an die Motorhardware 26 des Langstatorlinearmotors angelegt.

Die Aufteilung der Stellgröße StG in Größen der einzelnen wirkenden Antriebsspulen 7, 8 könnte aber natürlich auch im Antriebsspulenregler 20 durchgeführt werden. Der Ausgang des Antriebsspulenreglers 20 wäre dann eine Stellgröße StG für jede wirkende Antriebsspule 7, 8. In diesem Fall wären dann natürlich auch mehrere Anregesignale AS, eben ein Anregesignal AS für jede wirkende Antriebsspule 7, 8, vorzusehen. Gleichfalls ist es möglich, auch die Einzelspulenregler 24 im Antriebsspulenregler 20 zu realisieren. In diesem Fall wären die Stellgrößen StG eben Spannungen, womit auch das Anregesignal AS einer Spannung gleichzusetzen ist. Am erfinderischen Gedanken ändert das allerdings nichts.

Bei diesem Regelungskonzept kann man sich den Lageregler RL und den Geschwindigkeitsregler RV zur Transporteinheit Tx zugehörig denken. Es gibt also genauso viele Lageregler RL und Geschwindigkeitsregler RV wie Transporteinheiten Tx. Für jede Antriebsspule 7, 8 gibt es dazu einen untergeordneten Einzelspulenreglern 24', 24", 24'''.

Wie üblich hat der Antriebsspulenregler 20, bzw. die darin implementierten Regler, eine Anzahl von Reglerparameter RP, die einzustellen sind, sodass eine stabile und ausreichend dynamische Regelung der Bewegung der Transporteinheit Tx möglich ist. Die Reglerparameter RP werden üblicherweise einmal eingestellt, normalerweise vor der oder während der Inbetriebnahme der Transporteinrichtung 1, beispielsweise über die Anlagenregelungseinheit 10. Hierbei ist anzumerken, dass die Reglerparameter der Einzelspulenregler 24 in der Regel nicht zu parametrisieren sind, da die Einzelspulenregler 24 im Wesentlichen nur von der konkreten, bekannte Ausgestaltung der Antriebsspulen 7, 8 abhängig ist. Diese Reglerparameter der Einzelspulenregler 24 sind daher normalerweise bekannt und müssen nicht verändert werden. Zu parametrisieren sind folglich üblicherweise die Reglerparameter der der Transporteinheit Tx zugeordneten Reglerteile, also z.B. des Lagereglers RL und des Geschwindigkeitsreglers RV.

Die Bestimmung der Reglerparameter RP ist aber zum einen schwierig. Zum anderen kann sich im Betrieb der Transporteinrichtung 1 auch die geregelte Strecke (Antriebsspulen 7, 8, Transporteinheit Tx mit Erregungsmagneten 4, 5) und auch das Zusammenwirken der Transporteinheit Tx mit dem Transportabschnitt An ändern. Eine solche Änderung kann sich beispielsweise schon dadurch ergeben, dass die Transporteinheit Tx mit unterschiedlichen Lasten beladen ist. Gleichfalls wirkt sich auch Reibung zwischen der Transporteinheit Tx und der Führungskonstruktion 6 des Transportabschnitts An aus, wobei die Reibung wiederum vom aktuellen Verschleißzustand der Transporteinheit Tx und des Transportabschnitts A abhängig sein kann. Aber auch Betriebsparameter, wie beispielsweise die aktuelle Geschwindigkeit der Transporteinheit Tx oder eine Umgebungstemperatur, kann auf die Regelstrecke 21 wirken, beispielsweise durch geschwindigkeitsabhängige oder temperaturabhängige Reibung, und die Regelung beeinflussen. Damit der Antriebsspulenregler 20 bei diesen sehr unterschiedlichen, in einem großen Bereich schwankenden Bedingungen robust und stabil regeln kann, musste der Antriebsspulenregler 20 bisher über die Reglerparameter sehr konservativ ausgelegt werden. Damit wird aber die Reglerdynamik, im Sinne von schnellen Regeleingriffen, wie beispielsweise raschen Geschwindigkeitsänderungen, reduziert. Um dieses Problem zu verbessern, wird erfindungsgemäß wie folgt vorgegangen, wobei auf die Fig.5 und Fig.6 Bezug genommen wird.

Es wird eine Messzelle MZ festgelegt, wobei die Messzelle MZ zumindest zwei Antriebsspulen 8a, 8b einer Seite, die mit der Transporteinheit Tx zusammenwirken, vorzugsweise zumindest zwei benachbarte Antriebsspulen 8a, 8b, umfasst, wie in Fig.5 dargestellt. In Fig.5 ist zur Vereinfachung und ohne Einschränkung der Allgemeinheit nur eine Seite eines einzigen Transportsegments TSm mit der Transporteinheit Tx dargestellt. Wenn Transportsegmente TSm mit einer Anzahl von Antriebsspulen 8 vorgesehen sind, dann umfasst die Messzelle MZ vorzugsweise alle Antriebsspulen 8 eines Transportsegments TSm oder alle Antriebsspulen 8 mehrerer Transportsegmente TSm.

Zuerst wird eine Grobparametrierung der Reglerparameter RP vorgenommen. Das kann auf Basis der bekannten Masse der Transporteinheit Tx (samt der zu erwartenden Last) und den bekannten Auslegungsdaten des Langstatorlinearmotors durchgeführt werden, wobei die Reglerparameter RP in der Regel so eingestellt werden, dass der geschlossene Regelkreis eine stark reduzierte Bandbreite (geringe Dynamik), jedoch eine große Robustheit (hohe Stabilität) aufweist. Je nach verwendetem Antriebsspulenregler 20, z.B. ein herkömmlicher PI-Regler, sind verschiedene Methoden zur Reglerparametrierung bekannt, mit denen eine Grobparametrierung durchgeführt werden kann. Die Grobparametrierung soll lediglich sicherstellen, dass die Transporteinheit Tx bewegt und positioniert werden kann, ohne dabei hohe Anforderungen an die Dynamik und Genauigkeit zu stellen. Mit dieser Grobparametrierung kann mit der Transporteinheit Tx ein bestimmter Arbeitspunkt angefahren werden, indem eine entsprechende Sollgröße SG vorgegeben wird. Als Arbeitspunkt wird hierbei eine bestimmte Position s (Stillstand der Transporteinheit Tx) oder eine bestimmte Geschwindigkeit v der Transporteinheit Tx verstanden. Anfahren bedeutet dabei natürlich, dass der Arbeitspunkt im Bereich der Messzelle MZ angefahren wird, also dass die Transporteinheit Tx beispielsweise mit einer bestimmten Geschwindigkeit durch die Messzelle MZ bewegt wird, oder dass die Transporteinheit Tx in den Bereich der Messzelle MZ gefahren und darin angehalten wird.

Im Arbeitspunkt wird in den geschlossenen Regelkreis ein Anregesignal AS eingebracht, indem die Stellgröße StG mit dem Anregesignal AS überlagert wird. Das Anregesignal AS wird dabei allen Antriebsspulen 8a, 8b der Messzelle MZ aufgeprägt. Das Anregesignal AS umfasst ein bestimmtes, vorgegebenes Frequenzband. Mögliche Anregesignale AS sind beispielsweise ein bekanntes Pseudo-Random-Binary-Sequence-Signal (PRBS) oder Sinus-Sweep-Signal. Die Frequenzen im Anregesignal AS und die Amplituden des Anregesignals AS werden dabei so gewählt, dass die Systemantworten ausreichend informativ sind, d.h. dass die Systemantworten im interessierenden Frequenzbereich ausreichend groß sind, um signaltechnisch ausgewertet werden zu können. Ein interessierender Frequenzbereich ist insbesondere der Bereich in dem eine Resonanz oder Antiresonanz erwartet wird. Für die gegenständliche Anwendung ist oftmals ein Frequenzbereich von 10Hz bis 2.500Hz, insbesondere 500Hz bis 1000Hz, interessant. Die Amplituden des Anregesignals AS können sich am Nennstrom (oder Nennspannung) des Langstatorlinearmotors orientieren und liegen typischerweise im Bereich von 1/10 des Nennstromes (oder der Nennspannung). Das Anregesignal AS sollte vorzugsweise im Mittelwert Null sein, womit das geregelte System (Regelstrecke 21) selbst im Mittel möglichst unbeeinflusst bleibt. Mit dem Anregesignal AS wird der gewünschten Bewegung der Transporteinheit Tx (gegeben durch die Positionsvorgaben $s_{soll}$ oder Geschwindigkeitsvorgaben $v_{soll}$ zum Anfahren des Arbeitspunktes) eine Anregebewegung überlagert, was nur dann möglich ist, wenn die Messzelle MZ zumindest zwei Antriebspulen 8a, 8b umfasst.

Die mit dem Anregesignal AS überlagerte Stellgröße StGAS und die Antwort der Regelstrecke 21 auf diese Anregung, welche der Istgröße IG entspricht, werden einer Auswerteeinheit 22 zugeführt. Die Antwort der Regelstrecke 21 ist dabei natürlich der aktuelle Bewegungszustand der Transporteinheit Tx in Form der Istposition s oder Istgeschwindigkeit v. Die Antwort der Regelstrecke 21 kann dabei direkt gemessen werden, aus anderen Messgrößen abgeleitet werden oder kann auch durch einen Beobachter berechnet oder anderweitig geschätzt werden. In der Auswerteeinheit 22 wird aus der mit dem Anregesignal AS überlagerte Stellgröße StGAS und der Antwort der Regelstrecke 21 in bekannter Weise der Frequenzgang (mit Amplitudengang und Phasengang) ermittelt, typischerweise durch Filterung und diskreter Fourier-Transformation der beiden Signale und anschließender elementweiser Division der beiden Signale nach dem Schema Ausgang dividiert durch Eingang. Der Frequenzgang kann dabei für den offenen und/oder geschlossenen Regelkreis ermittelt werden.

Hierbei ist anzumerken, dass zwar mehreren Antriebsspulen 8a, 8b der Messzelle MZ das Anregesignal AS aufgeprägt werden muss, für die Ermittlung der Reglerparameter RP aber nur die überlagerte Stellgröße StGAS einer der Antriebsspulen 8a, 8b der Messzelle MZ ausgewertet werden muss. Wenn nachfolgend von Frequenzgang gesprochen wird, dann ist das der der Transporteinheit Tx und einer mit der Transporteinheit Tx zusammenwirkenden Antriebsspule 8a, 8b zugehörige Frequenzgang.

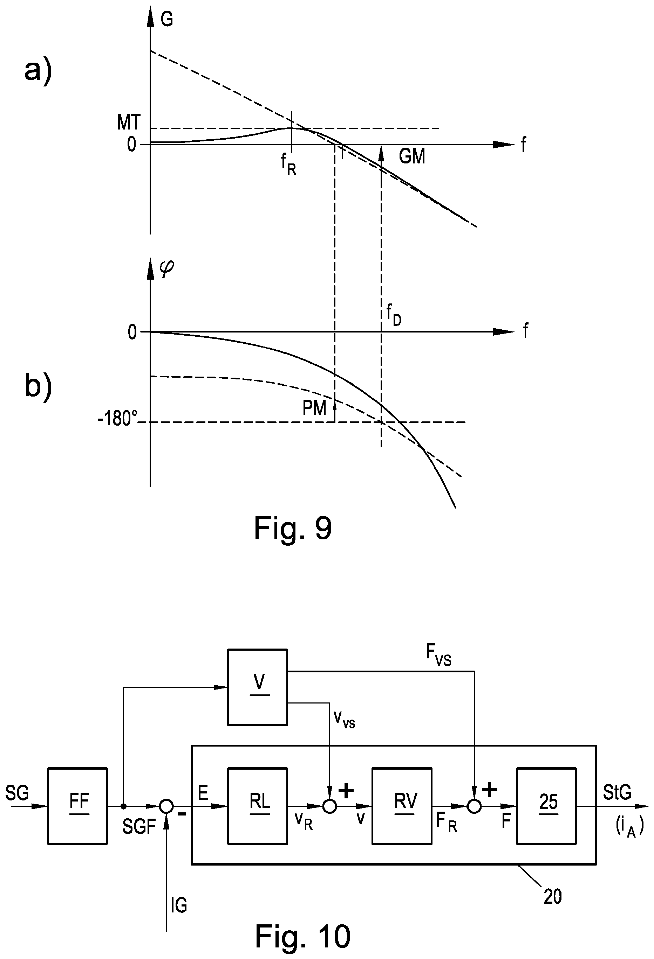

Der Frequenzgang kann als Basis für die Bestimmung der optimalen Reglerparameter RP dienen. Hierzu können verschiedene in der Regelungstechnik bekannte Methoden angewendet werden. Dabei werden die Reglerparameter RP variiert, um eine bestimmte Eigenschaft des Frequenzganges in gewünschter Weise einzustellen. Eine bekannte Methode ist beispielsweise das Maximum Peak Criteria. Die Maximum Peak Criteria Methode wird anhand der Fig.9 beispielhaft näher erläutert. Darin ist der Frequenzgang in Form des Amplitudenganges (Fig.9a oben) und des Phasenganges (Fig.9b unten), jeweils für den offenen (strichliert) und geschlossenen Regelkreis, dargestellt. Der offene Regelkreis ist bekanntermaßen die Betrachtung ohne Rückkopplung der Istgröße IG auf die Sollgröße SG. Die Reglerparameter RP werden nun beim Maximum Peak Criteria so variiert, dass der Maximalwert des Amplitudenganges des geschlossenen Regelkreises einen bestimmten, vorgegebenen Wert MT nicht überschreitet. Dieser Wert MT ergibt sich z.B. aus gewünschten Grenzen für die Verstärkungs- und Phasenreserve des offenen Regelkreises. Damit ist sichergestellt, dass der offene Regelkreis ausreichend Phasenreserve PM (Phase φ bei Verstärkung Null dB) und Verstärkungsreserve GM (Verstärkung G bei Phase -180°) besitzt. Je nach Implementierung des Antriebsspulenreglers 20 sind natürlich unterschiedliche Reglerparameter RP zu variieren, wie beispielsweise eine Verstärkung und eine Nachstellzeit bei einem PI-Regler.

Für die Variation der Reglerparameter RP bieten sich auch verschiedene Methoden an. Beispielsweise könnte ein Optimierungsproblem formuliert werden, um den Abstand des Maximums des Amplitudenganges des geschlossenen Regelkreises zum Wert MT zu minimieren.

Auf diese Weise erhält man für die jeweilige Transporteinheit Tx die optimalen Reglerparameter RP. Diese Reglerparameter RP können nun auch für gleiche Transporteinheiten Tx verwendet werden. Ebenso ist es auf dieselbe Weise denkbar, für jede oder mehrere Transporteinheiten Tx die jeweiligen optimalen Reglerparameter RP zu bestimmen.

Die Bestimmung der Reglerparameter RP kann auch für verschiedene Arbeitspunkte und/oder verschiedene Lasten der Transporteinheit Tx durchgeführt werden. Ebenso können die Reglerparameter RP für eine Transporteinheit Tx auch für verschiedene Messzellen MZ ermittelt werden. Damit kann im Betrieb des Langstatorlinearmotors für eine Transporteinheit Tx auch zwischen verschiedenen Reglerparametersätzen umgeschaltet werden. Beispielsweise kann der Reglerparametersatz ausgewählt werden, der der momentanen, mit einer Transporteinheit Tx beförderten Last am besten entspricht oder der zur momentanen Geschwindigkeit oder Position der Transporteinheit Tx am besten passt. Damit kann für jede Transporteinheit Tx ein eigener, oder auch mehrere, Reglerparametersatz erstellt werden. Auf diese Weise kann auch auf die Unterschiede der verschiedenen Transporteinheiten Tx Rücksicht genommen werden. Idealerweise weiß man bereits im Vorfeld, wie und mit welcher Last die Transporteinheiten Tx in der Transporteinrichtung 1 bewegt werden wird. Damit kann für die Reglerparametrierung schon der passende Arbeitspunkt oder die passende Messzelle MZ angefahren werden.

Der Frequenzgang beinhaltet aber auch andere wesentliche Charakteristika der Regelstrecke 21. Beispielsweise kann im laufenden Betrieb aus dem Amplitudengang die aktuelle Gesamtmasse $m_G$ der Transporteinheit Tx ermittelt werden. Daraus kann wiederum auf eine Beladung der Transporteinheit Tx geschlossen werden, da die Masse $m_{Tx}$ der Transporteinheit Tx bekannt ist. Ein allfälliger Unterschied muss damit auf die Beladung zurückzuführen sein, womit die Last bestimmt werden kann. Bei bekannter Last könnte dann z.B. wiederum der geeignete Reglerparametersatz zur optimalen Regelung der Transporteinheit Tx ausgewählt werden. Zur Ermittlung der Gesamtmasse $m_G$ wird z.B. der Amplitudengang $|G(j2\pi f)|$ bei niedrigen Frequenzen f untersucht und es gilt der Zusammenhang

$$|G(j2\pi f)| = \frac{K_f}{2 \cdot \pi \cdot f \cdot m_G}$$, mit der bekannten, normierten Motorkonstanten $K_f$ und der Gesamtmasse $m_G$. Dieser Zusammenhang gilt für hinreichend kleine Werte der Frequenz f unter der Annahme geringer viskoser Reibung (Reibungskraft ist proportional zum Betrag der Geschwindigkeit und ihr entgegengerichtet), was im gegenständlichen Anwendungsfall angenommen werden kann. Daraus kann die Gesamtmasse $m_G$ berechnet werden.

Weiters können aus dem Frequenzgang (Fig.9) als Charakteristik der Regelstrecke 21 eventuell vorhandene Resonanz- und Antiresonanzfrequenzen bestimmt werden, welche immer paarweise auftreten. Eine Resonanz-/Antiresonanzfrequenz kann bei lokalen oder globalen Maxima/Minima des Amplitudenganges angenommen werden. Durch Auswerten des Amplitudenganges des offenen Regelkreises können solche lokalen oder maximalen Maxima/Minima einfach gefunden werden, auch automatisiert. Falls Resonanzfrequenzen $f_R$ und Antiresonanzfrequenzen $f_{AR}$ vorhanden sind, kann abhängig von der Lage der Resonanzfrequenzen $f_R$ und Antiresonanzfrequenzen $f_{AR}$ auf der Frequenzachse eine Einteilung der Regelstrecke 21 in Kategorien wie starr, steif und flexibel durchgeführt werden. Dabei kann eine Regelstrecke 21 als starr eingeteilt werden, wenn das Resonanz-/Antiresonanz-Paar mit den niedrigsten Frequenzwerten $(f_R, f_{AR})$ deutlich größer als die Phasendurchtrittsfrequenz $f_D$ ist. Die Phasendurchtrittsfrequenz $f_D$ ist bekanntermaßen die Frequenz bei dem die Phase $\varphi$ des offenen Regelkreises den Wert -180° das erste Mal schneidet. Die Regelstrecke wäre steif, wenn die Frequenzwerte $(f_R, f_{AR})$ des Resonanz-/Antiresonanz-Paares im Bereich der Phasendurchtrittsfrequenz $f_D$ liegt und flexibel, wenn die die Frequenzwerte $(f_R, f_{AR})$ des Resonanz-/Antiresonanz-Paares deutlich kleiner als die Phasendurchtrittsfrequenz $f_D$ sind. Je nach Kategorie wird entschieden, ob die Resonanz-/Antiresonanzfrequenzen $(f_R, f_{AR})$ störend wirken und mit welchen Maßnahmen diese eliminiert bzw. gedämpft werden, beispielsweise durch ein geeignetes Filter.

Die Reglerparametrierung und/oder die Bestimmung der Charakteristika der Regelstrecke 21 kann auch im laufenden Betrieb in gewissen Abständen wiederholt werden. Damit kann der Antriebsspulenregler 20 laufend an den sich ändernden Verschleißzustand der Transporteinheit Tx und damit an eine sich ändernde Regelstrecke 21 angepasst werden. Die Reglerparametrierung kann beispielsweise jeden Tag vor dem Abschalten der Transporteinrichtung 1 oder vor der Inbetriebnahme der Transporteinrichtung 1 durchgeführt werden.

Die ermittelten Reglerparameter RP könnten dann noch auf Plausibilität geprüft werden. Beispielsweise könnte dazu der für die Reglerparametrierung verwendete Arbeitspunkt mit dem Antriebsspulenregler 20 mit den ermittelten optimalen Reglerparametern RP angefahren werden und wieder das Anregesignal AS aufgeschaltet werden. Der Frequenzgang des geschlossenen Regelkreises wird wieder ermittelt und basierend auf dessen maximaler Resonanzüberhöhung entschieden, ob das Verhalten des geschlossenen Regelkreises zufriedenstellend ist. Ebenso könnte man, zusätzlich oder alternativ, die Lage der Resonanzfrequenz $f_R$ bzw. Antiresonanzfrequenz $f_{AR}$ und/oder der Phasendurchtrittsfrequenz $f_D$ überprüfen und damit die Plausibilität der Reglerparameter RP überprüfen.

Entlang der Transportstrecke der Transporteinrichtung 1 können auch mehrere Messzellen MZ vorgesehen sein. Damit können auch unterschiedliche optimale Reglerparameter RP für verschiedene Abschnitte der Transportstrecke bestimmt werden. Dabei gelten die ermittelten Reglerparameter RP für eine Transporteinheit Tx vorzugsweise immer von einer ersten Messzellen MZ1 bis zur nächsten Messzelle MZ2.

Mit einem parametrisierten Antriebsspulenregler 20 kann nun auch die Regelstrecke 21 im Hinblick auf weitere, für den Prozess interessante Systemparameter, analysiert werden. Dazu können die Reglerparameter RP des Antriebsspulenreglers 20 z.B. wie oben beschrieben identifiziert werden, können aber auch anderweitig festgelegt werden oder können auch bekannt sein. Grundsätzlich ist die einzige Voraussetzung, dass mit dem Antriebsspulenregler 20 ein vorgegebenes Bewegungsprofil abgefahren werden kann. Das Bewegungsprofil soll die Regelstrecke 21 ausreichend anregen, um die Systemparameter identifizieren zu können. Dazu wird einer Transporteinheit Tx ein bestimmtes Bewegungsprofil, z.B. in Form eines zeitlichen Verlaufs von verschiedenen Geschwindigkeiten und Beschleunigungen (auch im Sinne von Verzögerungen), vorgegeben. Dabei ist es vorteilhaft, wenn Bewegungen in beide Richtungen enthalten sind, um richtungsabhängige Systemparameter zu erfassen. Dieses Bewegungsprofil, als Sollgrößen der Regelung, wird von der Transporteinheit Tx unter Kontrolle durch den Antriebsspulenregler 20 abgefahren. Dazu erzeugt der Antriebsspulenregler 20 gemäß dem Bewegungsprofil Stellgrößen StG, die auf die Regelstrecke 21 einwirken und Istgrößen IG der Regelstrecke 21 bewirken, die im geschlossenen Regelkreis auf die Sollgrößen SG zurückwirken.

Für die Regelstrecke 21 wird nun ein Modell mit Systemparametern angenommen, das die Regelstrecke 21 möglichst gut beschreibt. Beispielsweise kann für die Transporteinheit Tx die Bewegungsgleichung

$$F_V = m_G \frac{dv}{dt} + kv \cdot v + ks \cdot \text{sign}(v)$$

angeschrieben werden, mit der Gesamtmasse $m_G$ der Transporteinheit Tx, einem Koeffizienten kv für die viskose Reibung, einem Koeffizienten ks für die statische Reibung, der aktuellen Geschwindigkeit v der Transporteinheit Tx und der Vorzeichenfunktion sign. Die auf die Transporteinheit Tx wirkende Vortriebskraft $F_V$ setzt sich, wie oben beschrieben, aus den Wirkungen aller auf die Transporteinheit Tx wirkenden Antriebsspulen 7, 8 zusammen, also $F_V = \sum_i F_{VASi}$ ,

mit der von einer Antriebsspule 7, 8 aufgebrachten Kraft $F_{VASi}$. Diese Kraft kann für einen Langstatorlinearmotor bekanntermaßen in der Form

$$F_{VASi} = \frac{3}{2} \left\{ i_{Adi} \frac{\delta \Psi_p}{\delta x} + \frac{\pi}{\tau_p} \left[ \Psi_p i_{Aqi} + i_{Adi} i_{Aqi} \left( L_{Adi} - L_{Aqi} \right) \right] \right\}$$

modelliert werden. Dabei bezeichnet $\psi_p$ den durch die Erregungsmagnete 4, 5 erzeugten mit der Antriebsspule 7, 8 verketteten magnetischen Fluss, $T_P$ entspricht der Polweite der Erregungsmagnete der Transporteinheit Tx und x bezeichnet die Position der Transporteinheit Tx. $L_{Ad}$ und $L_{Aq}$ bezeichnen die bekannten Induktivitäten der Antriebsspule 7, 8 in d- bzw. q-Richtung. Mit der zulässigen Annahme $i_{Ad}=0$ bzw. $i_{Ad} \ll i_{Aq}$ kann diese Gleichung zu

$$F_{VASi} = \frac{3}{2} \frac{\pi}{\tau_p} \Psi_p i_{Aqi} = \frac{K_f}{\sqrt{2}} i_{Aqi}$$

vereinfacht werden, mit der Motorkonstanten $K_f$. Der Statorstrom $i_{Aq}$ einer Antriebsspule 7, 8 ergibt sich dann aus dem jeweiligen Anteil der Antriebsspule 7, 8 an der Vortriebskraft $F_V$.

Die Systemparameter des Modells der Regelstrecke 21, also in diesem Fall die Gesamtmasse $m_G$ der Transporteinheit Tx, der Koeffizienten kv für die viskose Reibung, der Koeffizienten ks und für die statische Reibung, lassen sich daraus unter der Voraussetzung einer bekannten Motorkonstante $K_f$ durch bekannte Parameterschätzverfahren ermitteln. Wenn ein anderer Systemparameter bekannt ist, z.B. die Gesamtmasse $m_G$ wie oben beschrieben, kann daraus auch die Motorkonstante $K_f$ geschätzt werden. Zur Parameterschätzung wird das vorgegebene Bewegungsprofil abgefahren, wodurch die Geschwindigkeit v (oder äquivalent die Position s) und die Beschleunigung $\frac{dv}{dt}$ als Eingabe in das Parameterschätzverfahren festgelegt ist. Der dabei an einer Antriebsspule 7, 8 eingestellte Statorstrom $i_{Aq}$ entspricht der Stellgröße StG und ist bekannt bzw. kann auch anderweitig erfasst, z.B. gemessen, werden. Gleichzeitig wird der Statorstrom $i_{Aq}$ aus dem Modell der Regelstrecke 21 berechnet und es wird der Fehler (z.B. der mittlere quadratische Fehler) zwischen dem berechneten und dem gemessenen Statorstrom durch Variation der Systemparameter des Modells minimiert. Bekannte Parameterschätzverfahren sind z.B. das Least Square Verfahren, das Recursive Least Square Verfahren, ein Kalman- oder Extended Kalman-Filter.

Die dabei ermittelten Systemparameter identifizieren die Regelstrecke 21, also insbesondere auch die Transportstrecke bzw. einen Transportabschnitt An bzw. ein Transportsegment TSm über den Koeffizienten kv für die viskose Reibung und den Koeffizienten ks für die statische Reibung, sowie den Luftspalt zwischen Erregungsmagnet 4, 5 und der Antriebsspule 7, 8 über den Parameter $K_f$. Durch Beobachtung des zeitlichen Verlaufs dieser Systemparameter am selben Abschnitt der Transportstrecke können Rückschlüsse auf den Verschleißzustand der Transporteinheit Tx und/oder der Transportstrecke, insbesondere des Transportabschnitts An oder eines Transportsegments TSm, gezogen werden. Wenn die Systemparameter der Regelstrecke 21 regelmäßig bestimmt werden, z.B. jeden Tag einmal, dann kann aus deren zeitlichen Veränderung aus dem Koeffizienten kv für die viskose Reibung und dem Koeffizienten ks für die statische Reibung, auf einen allfälligen Verschleiß geschlossen werden. Steigen diese Koeffizienten an, dann ist das ein Hinweis auf fortschreitenden Verschleiß. Ebenso kann aus der Motorkonstanten $K_f$ eine Veränderung des Luftspalts erkannt werden, was ebenso auf fortschreitenden Verschleiß hindeuten kann. Im Falle von unzulässigen Veränderungen, beispielsweise festgestellt durch Überschreiten eines vorgegebenen Grenzwertes, kann auch eine Wartung der Transporteinheit Tx und/oder des Transportabschnitts An eingeleitet werden.

Um das Führungsverhalten der Regelung der Bewegung der Transporteinheiten Tx durch den Antriebsspulenregler 20 zu verbessern, kann der Antriebsspulenregler 20 auch um eine Vorsteuerung V ergänzt werden. Die Vorsteuerung V wirkt (z.B. durch Addition) dabei auf den Eingang des Antriebsspulenreglers 20. Das ist in Fig.10 am Beispiel eines kaskadierten Antriebsspulenreglers 20 dargestellt. Die Vorsteuerung V wirkt (z.B. durch Addition) dabei jeweils auf den Eingang des zugehörigen Reglers, also eine Geschwindigkeitsvorsteuerung $v_{VS}$ auf den Eingang des Geschwindigkeitsreglers RV und eine Kraftvorsteuerung $F_{VS}$ auf den Eingang des Umrechnungsblocks 25. Die Vorsteuerung V kann in herkömmlicher Weise auf einem Modell der Regelstrecke 21 beruhen, wobei als Vorsteuerung V in der Regel die Inverse des Modells der Regelstrecke 21 verwendet wird. Das Modell ist vorzugsweise in Form von Bewegungsgleichungen der Transporteinheit Tx implementiert, wie oben ausgeführt. Das Modell ist dabei durch die identifizierten Systemparameter festgelegt, womit auch die Vorsteuerung (als Inverse des Modells) festgelegt ist. Anstelle eines Modells der Regelstrecke 21 kann aber auch ein beliebig anderes Vorsteuerungs-Regelgesetz implementiert sein.

Für eine Geschwindigkeitsvorsteuerung $v_{VS}$ kann beispielsweise das folgende Modell verwendet werden,

$$v_{VS} = \frac{ds}{dt}, \text{ mit der aktuellen Istposition s als Istgröße IG.}$$

Der Geschwindigkeitsregler RV regelt demnach nur mehr Nichtlinearitäten, unbekannte äußere Einflüsse und Störgrößen aus, die durch die Geschwindigkeitsvorsteuerung $v_{VS}$ nicht geregelt werden.

Für eine Kraftvorsteuerung $F_{VS}$ kann beispielsweise das obige Modell verwendet werden,

$$F_{VS} = m_G \frac{dv}{dt} + kv \cdot v + ks \cdot sign(v), \text{ mit dem Koeffizienten kv für die viskose Reibung, dem Koeffizienten ks für}$$

die statische Reibung, der aktuellen Geschwindigkeit der Transporteinheit Tx und der Vorzeichenfunktion sign.

Aus der derart ermittelten Kraftvorgabe, die benötigt wird, um den aktuellen Regelfehler E auszugleichen, berechnet der Umrechnungsblock 25 die Stellgröße StG für eine Antriebsspule 7, 8, z.B. in Form des einzustellenden Statorstromes $i_A$. Der Stromregler RS regelt mit einer Kraftvorsteuerung nur mehr Nichtlinearitäten, unbekannte äußere Einflüsse und Störgrößen aus, die durch die Kraftvorsteuerung nicht geregelt werden.

Weiters kann der Antriebsspulenregler 20 in bekannter Weise auch durch ein Führungsglättungsfilter FF ergänzt werden, auch ohne Vorsteuerung V, wie in Fig.10 dargestellt. Das Führungsglättungsfilter FF kann aus regelungstechnischer Sicht z.B. als Filter mit endlicher Impulsantwort (FIR-Filter) mit einer Zeitkonstanten T implementiert sein. Das Führungsglättungsfilter FF wird verwendet, um die Sollgröße SG zu filtern, um die Anregung bestimmter unerwünschter Frequenzen zu verhindern. Beispielsweise könnte der Führungsglättungsfilter FF als Ruckbegrenzung (mit dem Ruck als zeitliche Ableitung der Beschleunigung) implementiert sein.

Die durch den Führungsglättungsfilter FF gefilterte Sollgröße $SG_F$ wird dann für die Vorsteuerung V und die Regelung durch den Antriebsspulenregler 20 verwendet.

Aus einer Vorgabe eines Bewegungsprofils in Form einer Punkt-zu-Punkt Positionierung der Transporteinheit Tx kann am Ende dieses Bewegungsprofils das Schleppfehlerverhalten (Differenz aus dem Sollbewegungsprofil und dem Istbewegungsprofil) ausgewertet werden. Aus der Periodendauer der abklingenden Schwingung des Schleppfehlers (z.B. als Amplitudenverhältnis der beiden ersten Halbwellen) und der Periodendauer der ersten Schwingung kann dann in bekannter Weise die Zeitkonstante T des Führungsglättungsfilters FF, die der Periodendauer entspricht, berechnet werden.

Die Bestimmung der Systemparameter des Modells der Regelstrecke 21 und/oder der Parameter des Führungsglättungsfilters FF sind aufgrund der Vorgabe des Bewegungsprofils natürlich transportstreckenabhängig. Damit können auch Eigenschaften der Transportstrecke abgeleitet werden, wie beispielsweise statische oder dynamische Reibungsparameter. Anhand dieser Eigenschaften der Transportstrecke, insbesondere anhand der zeitlichen Veränderung dieser Eigenschaften, kann folglich auch auf den Zustand der Transportstrecke rückgeschlossen werden. Wenn dieselben Eigenschaften an derselben Transportstrecke für verschiedene Transporteinheiten Tx ermittelt werden, kann aus einem Vergleich der Eigenschaften auch auf den (Verschleiß)Zustand der Transporteinheit Tx geschlossen werden.

Das Aufprägen eines Bewegungsprofils zur Ermittlung der Systemparameter und/oder Parameter des Führungsglättungsfilters FF erfolgt vorzugsweise an einer Transportstrecke, entlang der keine hohen Ansprüche an die Bewegung der Transporteinheit Tx (Geschwindigkeitsvorgabe, Positionsvorgabe) gestellt werden.

Es ist auch denkbar, die Systemparameter und/oder die Parameter des Führungsglättungsfilters FF an verschiedenen Transportabschnitten An, beispielsweise für jedes Transportsegment TSm, zu ermitteln. Auf diese Weise kann durch Beobachtung des zeitlichen Verlaufs der Systemparameter verschiedener Transportabschnitte An auch Rückschlüsse auf den Verschleißzustand der verschiedenen Transportabschnitte An gezogen werden.

**Patentansprüche**

1. Verfahren zum Betreiben eines Langstatorlinearmotors mit einer Transportstrecke entlang der eine Vielzahl von Antriebsspulen (7, 8) hintereinander angeordnet sind und mit zumindest einer Transporteinheit (Tx), die entlang der Transportstrecke bewegt wird, wobei jede Antriebsspule (7, 8) von einem Antriebsspulenregler (20) mit zugehörigen Reglerparametern (RP) geregelt wird, indem von den Antriebsspulenreglern (20) für die mit der Transporteinheit (Tx) zusammenwirkenden Antriebsspulen (7, 8) Stellgrößen (StG) vorgegeben werden, **dadurch gekennzeichnet, dass** den Stellgrößen (StG) einer Antriebsspule (7, 8) ein Anregesignal (AS) mit einem vorgegebenen Frequenzband überlagert wird, **dass** Istgrößen (IG) der Antriebsspulenregelung ermittelt werden, **dass** aus den mit dem Anregesignal (AS) überlagerten Stellgrößen (StGAS) und den ermittelten Istgrößen (IG) ein Frequenzgang ermittelt wird, **und dass** aus dem Frequenzgang die Reglerparameter (RP) für diese Transporteinheit (Tx) ermittelt werden und die Transporteinheit (Tx) zum Bewegen entlang der Transportstrecke mit diesen ermittelten Reglerparametern (RP) geregelt wird.

2. Verfahren nach Anspruch 1, **dadurch gekennzeichnet, dass** die Reglerparameter (RP) variiert werden, um eine gewünschte, vorgegebene Eigenschaft des Frequenzganges einzustellen.

3. Verfahren nach Anspruch 1 oder 2, **dadurch gekennzeichnet, dass** für verschiedene Transporteinheiten (Tx) dieselben Reglerparameter (RP) verwendet werden.

4. Verfahren nach Anspruch 1 oder 2, **dadurch gekennzeichnet, dass** für verschiedene Transporteinheiten (Tx) verschiedene Reglerparameter (RP) verwendet werden.

5. Verfahren nach einem der Ansprüche 1 bis 4, **dadurch gekennzeichnet, dass** für verschiedene Transportabschnitte (An) der Transportstrecke verschiedene Reglerparameter (RP) ermittelt werden.

6. Verfahren nach einem der Ansprüche 1 bis 5, **dadurch gekennzeichnet, dass** die Ermittlung der Reglerparameter (RP) in vorgegebenen Abständen wiederholt wird.

7. Verfahren nach einem der Ansprüche 1 bis 4, **dadurch gekennzeichnet, dass** für verschiedene Beladungszustände einer Transporteinheit (Tx) verschiedene Reglerparameter (RP) ermittelt werden.

8. Verfahren nach Anspruch 7, **dadurch gekennzeichnet, dass** aus dem Frequenzgang die Masse der mit der Transporteinheit (Tx) beförderten Last bestimmt wird und damit die zugehörigen Reglerparameter (RP) ausgewählt werden.

9. Verfahren nach einem der Ansprüche 1 bis 4, **dadurch gekennzeichnet, dass** aus dem Frequenzgang vorhandene Resonanz- und Antiresonanzfrequenzen ($f_R$, $f_{AR}$) ermittelt werden und anhand der Phasendurchtrittsfrequenz ($f_D$) des Frequenzganges entschieden wird, ob die Resonanz- und Antiresonanzfrequenzen ($f_R$, $f_{AR}$) gedämpft werden.

10. Verfahren nach Anspruch 8 oder 9, **dadurch gekennzeichnet, dass** die Bestimmung der Masse der mit der Transporteinheit (Tx) beförderten Last und/oder der Resonanz- und Antiresonanzfrequenzen ($f_R$, $f_{AR}$) in vorgegebenen Abständen wiederholt wird.

11. Verfahren nach einem der Ansprüche 1 bis 10, **dadurch gekennzeichnet, dass** von der Transporteinheit (Tx) ein vorgegebenes Bewegungsprofil abgefahren wird und dabei zumindest ein Systemparameter eines Modells der Regelstrecke (21) mittels eines Parameterschätzverfahrens ermittelt wird, wobei der zeitliche Verlauf des Wertes des Systemparameters erfasst wird und aus dem zeitlichen Verlauf auf einen Verschleißzustand der Transporteinheit (Tx) und/oder der Transportstrecke geschlossen wird.

12. Verfahren nach Anspruch 11, **dadurch gekennzeichnet, dass** ein an einer Antriebsspule (7, 8) eingestellte Statorstrom ($i_A$) erfasst wird und gleichzeitig aus dem Modell der Regelstrecke (21) berechnet wird und ein Fehler zwischen dem erfassten und berechneten Statorstrom minimiert wird, indem der zumindest eine Systemparameter des Modells variiert wird.

13. Verfahren nach einem der Ansprüche 1 bis 12, **dadurch gekennzeichnet, dass** eine Vorsteuerung (V) implementiert wird, die auf den Eingang des Antriebsspulenreglers (7, 8) wirkt.

14. Verfahren nach Anspruch 13, **dadurch gekennzeichnet, dass** der Antriebsspulenregler (7, 8) einen Geschwindigkeitsregler (RV) mit einem Geschwindigkeitseingang und/oder einen Umrechnungsblock (25) mit einem Krafteingang umfasst und die Vorsteuerung (V) eine Geschwindigkeitsvorsteuerung ($v_{vs}$) und/oder eine Kraftvorsteuerung ($F_{vs}$) berechnet, wobei die Geschwindigkeitsvorsteuerung ($v_{vs}$) auf den Geschwindigkeitseingang und/oder die Kraftvorsteuerung ($F_{vs}$) auf den Krafteingang wirkt.

**Claims**

1. A method for operating a long stator linear motor with a transport track along which a plurality of driving coils (7, 8) are successively arranged and with at least one transport unit (Tx), which is moved along the transport track, wherein each driving coil (7, 8) is controlled by a driving coil controller (20) with corresponding controller parameters (RP), in that the driving coil controllers (20) set control variables (StG) for the driving coil (7, 8) interacting with the transport unit (Tx), **characterized in that** the control variables (StG) of a driving coil (7, 8) are sumperimposed with an excitation signal (AS) with a predetermined frequency band, **that** actual variables (IG) of the driving coil control are determined, **that** from the control variables (StGAS) superimposed with the excitation signal (AS) and the determined actual variables (IG) a frequency response is determined, **and that** from the frequency response the control parameters (RP) for this transport unit (Tx) are determined and the transport unit (Tx) is controlled for movement along the transport track using these determined control parameters (RP).

2. The method according to claim 1, **characterized in that** the control parameters (RP) are varied, in order to set a desired predetermined property of the frequency response.

3. The method according to claim 1 or 2, **characterized in that** for different transport units (Tx) the same control parameters (RP) are used.

4. The method according to claim 1 or 2, **characterized in that** for different transport units (Tx) different control parameters (RP) are used.

5. The method according to any of claims 1 to 4, **characterized in that** for different transport sections (An) of transport track different control parameters (RP) are determined.

6. The method according to any of claims 1 to 5, **characterized in that** the determination of the control parameters (RP) is repeated at predetermined intervals.

7. The method according to any of claims 1 to 4, **characterized in that** for different loading conditions of a transport unit (Tx) different control parameters (RP) are determined.

8. The method according to claim 7, **characterized in that** from the frequency response the mass of the load carried by the transport unit (Tx) is determined and the corresponding control parameters (RP) for the determined mass are selected.

9. The method according to any of claims 1 to 4, **characterized in that** from the frequency response resonance and anti-resonance frequencies ($f_R$, $f_{AR}$) are determined, and based on the phase passing frequency ($f_D$) of frequency response, it is decided, if the resonance and anti-resonance frequencies ($f_R$, $f_{AR}$) are attenuated.

10. The method according to claim 8 or 9, **characterized in that** the determination of the mass of the load carried by the transport unit (Tx) and/or of the resonance and anti-resonance frequencies ($f_R$, $f_{AR}$) is repeated at predetermined intervals.

11. The method according to any of claims 1 to 10, **characterized in that** a movement profile is preset for the transport unit (Tx), which is followed by the transport unit (Tx), **that** in doing so at least one system parameter of a model of the control system (21) is determined by means of a parameter estimation method, **and that** the value of the system parameter over time is collected and from the variation of the system parameter over time a wear condition of the transport unit (Tx) and/or of the transport track is deduced.

12. The method according to claim 11, **characterized in that** a stator current ($i_A$) set on a driving coil (7, 8) is determined and at the same time calculated from the model of the control system (21) and an error between the detected and calculated stator current is minimized, **in that** the at least one system parameter of model is varied.

13. The method according to one of claims 1 to 12, **characterized in that** a pilot control (V) is implemented, which acts on the input of the driving coil controller (20).

14. The method according to claim 13, **characterized in that** the driving coil controller (20) comprises a speed controller (RV) with a speed input and/or a conversion block (25) with a force input, and the pilot control (V) calculates a speed pilot control ($v_{vs}$) and/or a force pilot control ($F_{vs}$), wherein the speed pilot control ($v_{vs}$) acts on the speed input and/or the force pilot control ($F_{vs}$) acts on the force input.

**Revendications**

1. Procédé de fonctionnement d'un moteur linéaire à stator long comportant un chemin de transport le long duquel une pluralité de bobines d'entraînement (7, 8) sontdisposées les unes derrière les autres et comportant au moins une unité de transport (Tx) qui est déplacée le long du chemin de transport, chaque bobine d'entraînement (7, 8) étant régulée par un régulateur de bobine d'entraînement (20) à l'aide des paramètres de régulation (RP) associés en ce que les variables de réglage (StG) sont spécifiées par les régulateurs de bobine d'entraînement (20) pour les bobines d'entraînement (7, 8) interagissant avec l'unité de transport (Tx), **caractérisé en ce qu'un** signal d'excitation (AS) avec une bande de fréquence prédéterminée est superposé aux variables de réglage (StG) d'une bobine d'entraînement (7, 8), **en ce que** les variables réelles (IG) de la régulation de bobine d'entraînement sont déterminées, **en ce qu'à** partir des variables de réglage (StGAS) superposées au signal d'excitation (AS) et des variables réelles déterminées (IG) une réponse en fréquence est déterminée **et en ce que** les paramètres de régulation (RP) pour cette unité de transport (Tx) sontdéterminés à partir de la réponse en fréquence et l'unité de transport (Tx) est régulée pour se déplacer le long du chemin de transport à l'aide de ces paramètres de régulation (RP) déterminés.

2. Procédé selon la revendication 1, **caractérisé en ce que** les paramètres de régulation (RP) sont modifiés pour régler une propriété prédéterminée souhaitée de la réponse en fréquence.

3. Procédé selon la revendication 1 ou 2, **caractérisé en ce que** les mêmes paramètres de régulation (RP) sont utilisés pour différentes unités de transport (Tx).

4. Procédé selon la revendication 1 ou 2, **caractérisé en ce que** différents paramètres de régulation (RP) sont utilisés pour différentes unités de transport (Tx).

5. Procédé selon l'une des revendications 1 à 4, **caractérisé en ce que** différents paramètres de régulation (RP) sont déterminés pour différentes sections de transport (An) du chemin de transport.

6. Procédé selon l'une des revendications 1 à 5, **caractérisé en ce que** la détermination des paramètres de régulation (RP) est répétée àdes intervalles prédéterminés.

7. Procédé selon l'une des revendications 1 à 4, **caractérisé en ce que** différents paramètres de régulation (RP) sont déterminés pour différents états de chargement d'une unité de transport (Tx).

8. Procédé selon la revendication 7, **caractérisé en ce que** la masse de la charge transportée par l'unité de transport (Tx) est déterminée à partir de la réponse en fréquence et les paramètres de régulation associés (RP) sont ainsi sélectionnés.

9. Procédé selon l'une des revendications 1 à 4, **caractérisé en ce que** les fréquences de résonance et d'anti-résonance existantes ($f_R$, $f_{AR}$) sont déterminées à partir de la réponse en fréquence et une décision est prise sur la base de la fréquence de transition de phase ($f_D$) de la réponse en fréquence pour déterminer si les fréquences de résonance et d'anti-résonance ($f_R$, $f_{AR}$) sont atténuées.

**10.** Procédé selon la revendication 8 ou 9, **caractérisé en ce que** la détermination de la masse de la charge transportée par l'unité de transport (Tx) et/ou des fréquences de résonance et d'anti-résonance ($f_R$, $f_{AR}$) est répétée à des intervalles prédéterminés.

**11.** Procédé selon l'une des revendications 1 à 10, **caractérisé en ce que** l'unité de transport (Tx) suit un profil de déplacement prédéterminé et au moins un paramètre système d'un modèle du système commandé (21) est déterminé au moyen d'un procédé d'estimation de paramètre, l'évolution temporelle de la valeur du paramètre système étant détectée et un état d'usure de l'unité de transport (Tx) et/ou du chemin de transport étant déduit de l'évolution temporelle.

**12.** Procédé selon la revendication 11, **caractérisé en ce qu'**un courant statorique ($i_A$) réglé sur une bobine d'entraînement (7, 8) est détecté et en même temps est calculé à partir du modèle du système commandé (21) et une erreur entre le courant statorique détecté et calculé est minimisée, en faisant varier l'au moins un paramètre système du modèle.

**13.** Procédé selon l'une des revendications 1 à 12, **caractérisé en ce qu'**une commande pilote (V) est mise en œuvre qui agit sur l'entrée du régulateurde bobine d'entraînement (7,8).

**14.** Procédé selon la revendication 13, **caractérisé en ce que** le régulateur de bobine d'entraînement (7, 8) comprend un régulateur de vitesse (RV) avec une entrée de vitesse et/ou un bloc de conversion (25) avec une entrée de force et la commande pilote (V) calcule une commande pilote de vitesse ($v_{vs}$) et/ou une commande pilote de force ($F_{vs}$), la commande pilote de vitesse ($V_{vs}$) agissant sur l'entrée de vitesse et/ou lacommande pilote de force ($F_{vs}$) agissant sur l'entrée de force.

Fig. 1

Fig. 2

Fig. 3

Fig. 4

Fig. 5

Fig. 6

Fig. 7

Fig. 8

a)

b)

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1180733 A1
- WO 2013143783 A1
- US 6876107 B2
- US 20130074724 A1
- WO 2004103792 A1
- US 6101952 A
- DE 1963505 A1
- WO 2015036302 A1
- WO 2015042409 A1